# FASCICULE DE BREVET EUROPEEN

(11) **EP 2 811 749 B1**
(45) Date de publication et mention de la délivrance du brevet: **07.07.2021**
(21) Numéro de dépôt: 14169047.9
(22) Date de dépôt: 20.05.2014
(51) Int. Cl.: H04N 21/41, H04N 21/439, H04N 21/462, H04N 21/81

(54) **Synchronisation de contenus multimédia sur deuxième écran**
Synchronisierung der Multimediainhalte auf einem zweiten Bildschirm
Synchronisation of multimedia content on a second screen

(30) Priorité: 04.06.2013 FR 1355101
(43) Date de publication de la demande: 10.12.2014
(73) Titulaire: SYNC, 92310 Sèvres (FR)
(72) Inventeur: Weill, Laurant, 91570 Bievres (FR)
(74) Mandataire: Ipsilon

(56) Documents cités:
- EP-A1- 1 989 879
- EP-A1- 2 479 984
- EP-A1- 2 579 605
- WO-A1-2013/040533
- US-A1- 2004 044 532

## Description

La présente invention concerne de façon générale le domaine de la diffusion multimédia interactive, et plus particulièrement la détection et la synchronisation automatique d'un contenu multimédia diffusé puis reproduit sur un premier équipement, par exemple un téléviseur, de façon à permettre l'affichage d'un contenu enrichi sur un deuxième écran équipant une tablette numérique, un téléphone ou un PC fixe ou portable.

Partant du constat qu'un pourcentage important et croissant de téléspectateurs consulte l'écran de leur équipement portatif ou leur ordinateur (appelés dans la suite « deuxième écran » et « deuxième équipement ») tout en regardant un programme diffusé sur leur téléviseur principal, de nombreuses applications à charger et exécuter sur le deuxième équipement pour affichage sur le deuxième écran sont aujourd'hui développées pour permettre d'enrichir les informations relatives au programme diffusé et offrir aux téléspectateurs de larges possibilités d'interactions avec le programme.

A titre d'exemple non limitatif, lors d'un jeu télévisé diffusé sur une chaîne, le téléspectateur peut afficher sur son deuxième écran les mêmes questions que celles qui sont posées aux participants, y répondre, comparer ses scores, envoyer des commentaires en temps réel, ou toute autre action qui donne vraiment à l'utilisateur l'impression de participer à l'émission.

Ce type d'applications intéresse également les annonceurs qui voient une opportunité de donner plus d'informations concernant un produit faisant l'objet d'un spot publicitaire à la télévision.

Du point de vue de l'utilisateur, ces expériences, appelées encore « expériences second écran », reposent sur l'utilisation d'une architecture système permettant de fournir au second écran (ou écran compagnon) des contenus enrichis pendant la diffusion d'un programme.

La Demanderesse a notamment développé le système PLAYALONG (marque enregistrée), dont l'architecture s'articule selon trois parties principales :
- au niveau du « back office » (terminologie anglo-saxonne pour indiquer les composantes et applications internet qui ne sont pas visibles par l'utilisateur final), un outil de CMS (initiales anglo-saxonnes mises pour Content Management System) qui va essentiellement préparer, formater et stocker tous les contenus enrichis que l'on veut envoyer, et décider des instants auxquels ces contenus enrichis doivent être envoyés ;
- la plateforme PLAYALONG proprement dite, comportant une pluralité de serveurs hébergés dans un nuage informatique de façon à récupérer les contenus enrichis envoyés par l'outil de CMS, et dont le rôle est de redéployer ces contenus à un grand nombre d'équipements mobiles connectés pour affichage sur leur écran.
- Les applications clients chargées et exécutées sur les équipements mobiles des utilisateurs finaux de façon à recevoir les contenus enrichis envoyés par la plateforme et les afficher sur l'écran associé à ces équipements.

La plateforme PLAYALONG utilise en particulier des serveurs push pour permettre de pousser les contenus (exemple : quizz, sondage, vidéo, image, tableau de scores) vers les équipements mobiles sans que ces derniers n'aient à en faire la demande.

On comprend aisément que certains contenus enrichis doivent apparaître de façon parfaitement synchronisée avec le contenu multimédia principal affiché sur le premier écran. Un défaut de synchronisation aurait en effet un impact négatif sur l'expérience second écran.

Or, à l'instant dit de référence où un programme avec un contenu multimédia auquel on souhaite adjoindre un contenu enrichi est effectivement diffusé, il peut s'écouler un délai très variable avant que ce contenu multimédia soit effectivement affiché sur le premier écran, ce délai étant fonction du réseau de diffusion permettant d'atteindre le téléviseur principal. Ainsi, un utilisateur dont le téléviseur reçoit un programme multimédia via la télévision numérique terrestre ne visualisera pas les images de ce même programme multimédia en même temps qu'un utilisateur dont le téléviseur est connecté via une box internet ou encore via un réseau satellite. Les décalages entre réseaux peuvent être assez importants, et aller jusqu'à 20 secondes.

Des solutions de synchronisation utilisant la reconnaissance, par l'équipement mobile doté du second écran, du son qui passe sur l'équipement principal ont déjà été proposées. Ces solutions utilisant ce principe d'ACR (initiales anglo-saxonnes mises pour Audio Content Récognition) sont de deux types :
Une première technique, connue sous la terminologie anglo-saxonne de « Watermarking », consiste à injecter périodiquement, dans la bande audio du programme télévisé à diffuser, un signal audio particulier (ou marque) physiologiquement inaudible pour l'oreille humaine, comprenant l'instant de référence, c'est-à-dire l'instant d'émission de l'image diffusée. Lorsque la bande audio est reproduite par les haut-parleurs de l'équipement principal, par exemple le téléviseur, une application spécifique chargée et exécutée par le deuxième équipement va également écouter cette bande audio, en particulier via le microphone intégré dans l'équipement mobile, reconnaître les marques cachées et en extraire l'instant de référence. Le deuxième équipement, qui comporte sa propre horloge interne, va alors pouvoir déterminer le décalage temporel entre l'instant de référence et l'instant où le programme correspondant est effectivement reproduit sur le téléviseur, et utiliser ce décalage temporel pour déterminer les instants précis auxquels des contenus enrichis doivent être affichés sur le second écran. Dans le cas d'émissions en direct, cette technique de « Watermarking » est très contraignante pour les régies des chaînes de télévision qui doivent être équipées du matériel adéquat permettant d'injecter les marques audio cachées en temps réel. En outre, la bande passante utilisée pour ces marques est faible, ce qui ne permet pas de faire transiter beaucoup d'informations.

Selon une autre technique, connue sous la terminologie anglo-saxonne de « Fingerprinting », et décrite notamment dans le document WO 2013/040533 A1, une application spécifique chargée et exécutée sur le deuxième équipement va lui permettre d'écouter, via son microphone intégré, la bande audio reproduite par les haut-parleurs de l'équipement principal, et de prélever des échantillons audio qu'il va transmettre à une plateforme distante, typiquement un serveur internet. La plateforme distante écoute et stocke quant à elle en permanence tous les programmes tels que diffusés sur toutes les chaînes. Lorsqu'elle reçoit un échantillon audio prélevé par le deuxième équipement, la plateforme est donc apte à comparer cet échantillon avec les programmes écoutés, et si elle le trouve, à calculer le décalage temporel qu'elle va pouvoir transmettre en retour au deuxième équipement. La solution de « Fingerprinting » est moins contraignante pour les diffuseurs de programmes multimédia puisqu'aucun signal ne nécessite d'être injecté dans le signal audio/vidéo diffusé. Néanmoins, les équipements du côté de la plateforme serveurs pour écouter les programmes et répondre à des charges importantes d'utilisateurs sont coûteux. De même, les temps de traitement au niveau de la plateforme pour pouvoir effectuer les comparaisons de tous les échantillons reçus avec l'ensemble des programmes écoutés peuvent être importants, de sorte que le deuxième équipement risque de ne pas recevoir à temps l'information de décalage temporel qu'il doit appliquer pour commander l'affichage de certains contenus enrichis sur le deuxième écran, ou réagir trop tard

D'autres techniques sont également connues de l'art antérieur, et sont décrites notamment dans les documents suivants: US 2004/044532 A1 (KARSTENS CHRISTOPHER K [US]) 4 mars 2004 (2004-03-04); EP 2 479 984 A1 (THOMSON LICENSING [FR]) 25 juillet 2012 (2012-07-25); WO 2013/040533 A1 (UMAMI CO [US]; SLAVIN BRYAN [US]; ROSENBERG SCOTT [US]; GLENNON ARON [) 21 mars 2013 (2013-03-21); EP 2 579 605 A1 (ACCENTURE GLOBAL SERVICES LTD [IE]) 10 avril 2013 (2013-04-10) et EP 1 989 879 A1 (INTIME MEDIA IRELAND LTD [IE]) 12 novembre 2008 (2008-11-12).

Il existe donc un besoin pour une solution permettant une synchronisation très précise de l'affichage de contenus enrichis sur un second écran par rapport à l'affichage sur l'écran principal du programme diffusé. La présente invention permet de répondre à ce besoin en proposant un procédé de synchronisation automatique entre la reproduction, par un premier équipement d'un contenu multimédia compris dans un programme diffusé et l'affichage d'un contenu enrichi associé au contenu multimédia sur un écran d'un deuxième équipement apte à être connecté à un réseau de communication, selon la revendication 1.

En d'autres termes, en plus de pousser un contenu enrichi, le serveur informatique (par exemple la plateforme PLAYALONG), est utilisé ici pour pousser à l'avance, sur le deuxième équipement, des signatures audio du programme diffusé, et pour pousser l'information représentative du début de la diffusion du programme ou du contenu multimédia à écouter avec la référence du programme. Le deuxième équipement va alors se mettre à écouter la bande audio reproduite par le premier équipement, à identifier le programme diffusé ou au moins le contenu multimédia à enrichir, par comparaison, en local, avec les signatures audio préalablement reçues, l'instant de reproduction effective sur le premier équipement, et en déduire ainsi le délai écoulé dont il faut tenir compte pour afficher le contenu enrichi de manière synchronisée. Les différentes informations sont de préférence poussées vers le deuxième équipement (technique dite du « push »). En variante, elles pourraient être envoyées sur requête du deuxième équipement (technique dite du « pull »).

Selon des caractéristiques optionnelles supplémentaires :
- le contenu enrichi est généré par un module générateur de contenus enrichie, et stocké dans la base de données avant transmission au deuxième équipement ;
- le programme diffusé est un programme de radio, ou un programme télévisé. Plus généralement, le programme diffusé peut être audiovisuel (télé, cinéma, internet...) ou seulement audio (stations radios, téléphones...) ;
- le premier équipement peut être un téléviseur, un ordinateur, un téléphone intelligent, une console de jeu, ou tout équipement électronique apte à reproduire au moins le son du programme diffusé reçu ;
- le deuxième équipement peut être une tablette numérique, un téléphone intelligent, un ordinateur fixe ou portable, ou tout équipement comprenant un microphone, un écran d'affichage, et des moyens de connexion au réseau internet.

L'invention a également pour objet un serveur informatique pour la mise en œuvre du procédé de synchronisation, caractérisé en ce qu'il est apte à transmettre automatiquement au deuxième équipement, via le réseau de communication:
- la signature audio représentative du programme ou du contenu multimédia télédiffusé ;
- l'information représentative de l'instant de référence correspondant à l'instant auquel le programme ou le contenu multimédia est effectivement diffusé par la source distante; et
- le contenu enrichi à afficher par le deuxième équipement.

L'invention a par ailleurs pour objet une application logicielle apte à être chargée et exécutée sur un équipement comprenant un microphone, un écran d'affichage et des moyens de connexion au réseau de communication, pour la mise en œuvre du procédé de synchronisation, caractérisée en ce qu'elle comporte :
- des instructions de code de programme aptes à commander l'équipement pour qu'il se connecte au serveur informatique via le réseau de communication, de façon à recevoir automatiquement d'une part, la signature audio représentative du programme ou du contenu multimédia télédiffusé pour mémorisation, et d'autre part, l'instant de référence correspondant à l'instant auquel le programme ou le contenu multimédia est effectivement diffusé par la source distante ;
- des instructions de code de programme aptes à commander à l'équipement, sur réception de l'instant de référence, pour qu'il détecte, via le microphone, un signal audio généré par le premier équipement lors de la reproduction du programme diffusé, et identifie l'instant de reproduction par comparaison du signal audio détecté avec la signature audio mémorisée;
- des instructions de code de programme aptes à commander l'affichage du contenu enrichi sur l'écran d'affichage au bout d'un délai de synchronisation déterminé à partir seulement de l'instant de référence et de l'instant de reproduction identifié.

L'invention et les avantages qu'elle procure seront mieux compris au vu de la description suivante faite en référence aux figures annexées, dans lesquelles :
- la figure 1 illustre schématiquement un exemple d'infrastructure de communication permettant de mettre en œuvre l'invention ;
- la figure 2 représente une série d'étapes susceptibles d'être mises en œuvre dans un procédé de synchronisation conformément à l'invention.

Dans la description qui va suivre, on considère, à titre d'exemple non limitatif, que le programme diffusé comprenant au moins un contenu multimédia, auquel on souhaite associer au moins un contenu enrichi à afficher sur un équipement mobile, est un programme télévisé, comportant par conséquent des images et des sons. Comme cela apparaîtra mieux par la suite, l'invention est également applicable pour des programmes uniquement audio, tels qu'une émission sur les ondes radio.

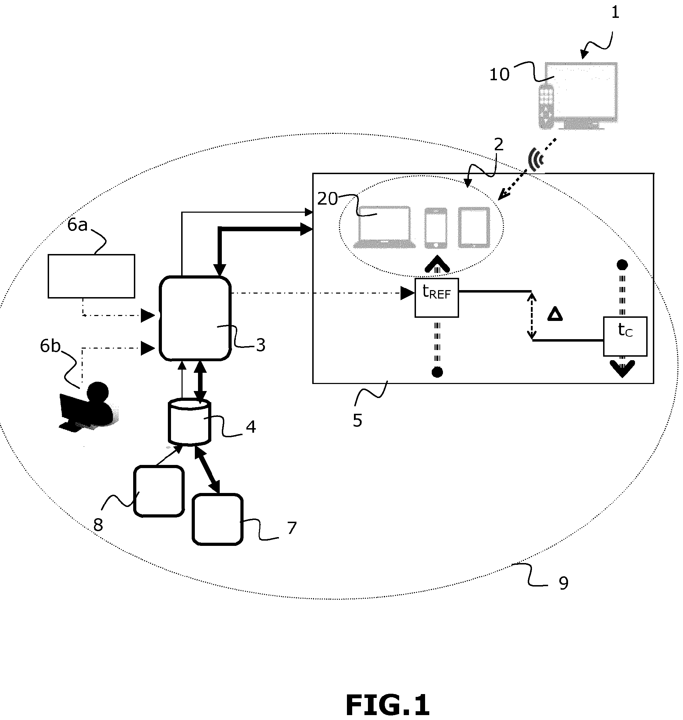

En référence à la figure 1, on a représenté un premier équipement 1 apte à recevoir et reproduire le programme diffusé. Dans le cas d'un programme télévisé, le premier équipement 1 est donc typiquement un téléviseur, mais peut être constitué de tout équipement connu apte à reproduire le son et l'image du programme télévisé respectivement sur des haut-parleurs (non représentés) et un écran 10 (ordinateur fixe ou portable, téléphone intelligent, console de jeu...).

La manière dont le programme est effectivement diffusé par une source distante puis reçu par le premier équipement 1 n'a pas été représentée sur la figure car elle ne présente pas d'intérêt particulier, sauf celui déjà indiqué en introduction d'induire un délai de transmission entre l'instant où débute la diffusion du programme (instant de référence t_{REF}) et l'instant où débute la reproduction de ce programme sur le premier équipement 1 (instant de reproduction t_{C}), ce délai de transmission étant variable selon le réseau de diffusion utilisé (Télévision numérique terrestre, satellite, IP...).

L'architecture système qui va permettre au téléspectateur de vivre une expérience « second écran » comporte essentiellement :
- un deuxième équipement 2 détenu par le téléspectateur et intégrant le second écran 20;
- au moins une plateforme de push par des serveurs informatiques 3 ;
- une base de données 4 reliée à la plateforme;
- une application logicielle spécifique 5 apte à être chargée et exécutée sur le deuxième équipement mobile 2 ;
et, au niveau de la partie « back-office » :
- un module 6a gestionnaire de contenu permettant notamment de gérer et pousser sur la plateforme l'information indiquant le début de la diffusion du programme à écouter avec la référence du programme ;
- un module 7 générateur de contenus enrichis connecté à la base de données 4;
- un module 8 générateur de signatures audio connecté à la base de donnée 4.

Ces différents composants sont aptes à communiquer entre eux via un réseau 9 de communication, typiquement le réseau Internet. L'application logicielle spécifique 5 comprend différentes parties d'instructions de code de programme exécutées par le deuxième équipement 2 dans le but de permettre l'expérience second écran.

Le deuxième équipement 2 est par exemple une tablette numérique, un ordinateur portable, un téléphone intelligent, ou plus généralement tout équipement portatif ou fixe comprenant un microphone, un écran d'affichage et des moyens de connexion au réseau de communication.

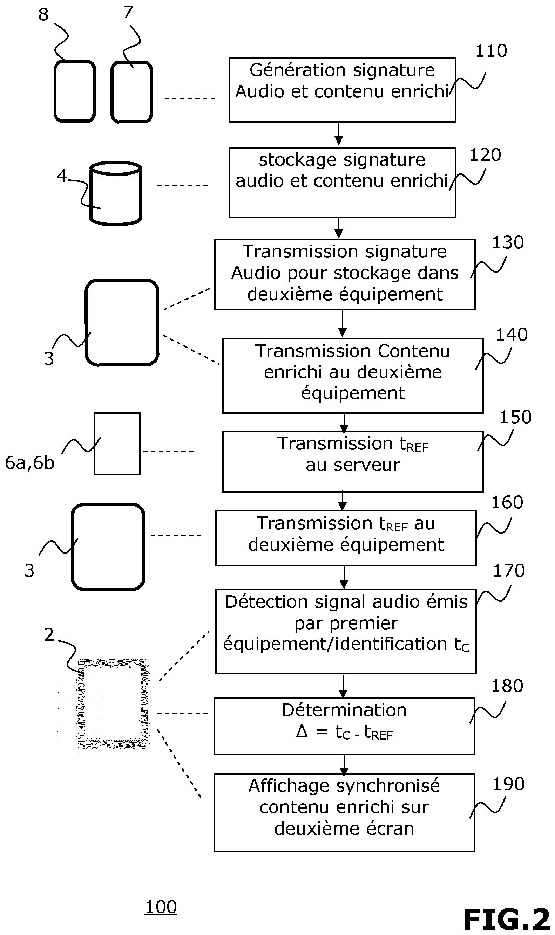

Un procédé 100 de synchronisation conforme à l'invention et utilisant l'architecture système définie ci-dessus va à présent être décrit en référence à la figure 2. Pour faciliter la compréhension, les composants de l'architecture de la figure 1 concernés par chaque étape ont été représentés sur la gauche de la figure 2, en regard des différentes étapes. Les étapes ont été montrées dans un certain ordre. Néanmoins, on comprendra à la lecture qui suit que l'ordre de certaines étapes peut être modifié sans départir du cadre de la présente invention.

Le procédé 100 de synchronisation comprend une série d'étapes (étapes 110 à 140) qui peuvent intervenir à tout moment antérieur ou postérieur à l'instant de référence t_{REF} auquel le programme est diffusé, mais préalablement à l'instant t_{C} où le contenu multimédia que l'on veut enrichir va effectivement être reproduit sur le premier équipement 1. Une première étape 110 comprend la génération d'une ou de plusieurs signatures audio représentatives du programme diffusé concerné. Cette étape 110 consiste à produire une signature caractéristique du son, suffisamment compressée pour être transportable facilement et rapidement (poids de la signature), mais suffisamment détaillée pour définir de façon univoque le son capté. Sur un son durant plusieurs heures ce sont des échantillons qui sont traités et non la totalité du son. La génération de la signature (ou ADN) du son utilise dans son principe de base le traitement des transformées de Fourier.

Ces signatures sont générées par le module 8 générateur de signatures audio.

Par ailleurs, le contenu enrichi que l'on souhaite associer au programme pour affichage sur le deuxième écran 20 est généré par le module 7 gestionnaire de contenus.

Le contenu enrichi et les signatures audio sont ensuite transmis à la base de données 4 pour stockage (étape 120). Il convient de noter que, bien que la génération du contenu enrichi et de la signature audio ait été représentée comme réalisée dans une seule étape 110, ces opérations sont indépendantes et peuvent être réalisées de façon non concomitante. Il en va de même pour l'étape de transmission 120.

La signature audio est ensuite transmise par le serveur 3 informatique au deuxième équipement 2 lors de l'étape 130. Cette transmission se fait de préférence selon la technique du « push ». La figure 1 illustre en traits fins et continus le cheminement d'une signature audio depuis le module 8 générateur de signature audio jusqu'au deuxième équipement 2.

Le serveur 3 informatique transmet par ailleurs au deuxième équipement 2 le contenu enrichi. Cette étape, référence 140 sur la figure 2, est considérée ici comme postérieure à la transmission de la signature audio, mais peut en fait avoir lieu à n'importe quel moment avant l'instant t_{C}. La figure 1 illustre en traits épais et continus le cheminement d'un contenu enrichi depuis le module 7 générateur de contenus enrichis jusqu'au deuxième équipement 2.

Par la suite, au cours de la diffusion du programme par la source distante, le programme diffusé va être reçu et reproduit par le premier équipement 1. En particulier, la bande sonore associée à ce programme va être jouée par les haut-parleurs de cet équipement 1. Lors d'une étape 160, le serveur 3 va transmettre automatiquement au deuxième équipement 2 une information représentative de l'instant de référence t_{REF}. Pour ce faire, le module 6a est apte à écouter toutes les sources diffusant des programmes, et à reconnaitre le programme par identification de sa signature audio préalablement stockée (étape 150). En variante, un opérateur humain 6b (voir figure 1) peut être à l'origine de la transmission de cette information. La figure 1 illustre en traits interrompus le cheminement d'une information représentative de l'instant de référence t_{REF} depuis le module 6 gestionnaire de contenu jusqu'au deuxième équipement 2. Dans les deux cas, l'information transmise comprend en outre avantageusement un identifiant associé à la signature audio, une table des heures de début et de fin de programme, ainsi que le contenu enrichi ou à défaut, un lien vers ce contenu enrichi qu'il conviendra d'afficher sur le deuxième écran.

A la réception de cette information, l'application logicielle 5 exécutée par le deuxième équipement 2 va commander ce dernier pour qu'il écoute, via son microphone intégré, le signal audio généré par le premier équipement 1 lors de la reproduction du programme diffusé. Le deuxième équipement 2 va ainsi, par comparaison avec ce qu'il écoute et la signature audio préalablement reçue (étape 130), identifier le programme diffusé et l'instant de reproduction t_{C} sur le premier équipement (étape 170).

A partir de la connaissance de ces deux valeurs t_{REF} et t_{C}, le deuxième équipement 2 est alors en mesure de déterminer la durée qui s'est écoulée entre l'instant de début de diffusion du programme et l'instant de reproduction effective par le premier équipement, qui correspond au délai Δ qu'il doit appliquer avant de commander l'affichage sur son écran 20 du contenu enrichi qui lui est poussé pour être synchrone avec le premier écran (étapes 180 et 190).

Bien que le procédé conforme l'invention n'ait été décrit qu'en référence à une expérience « second écran » par rapport à un programme télévisé, on comprend que l'invention trouve des applications dès lors que le programme diffusé est audio. En conséquence, du contenu enrichi peut être fourni en complément de tout programme audiovisuel (télévision, cinéma, internet...), ou de tout programme audio (ondes radio, téléphone, ...).

Par ailleurs, il convient de noter que la plateforme 3 peut être composée de plusieurs serveurs hébergés dans un nuage informatique. De même, plusieurs bases de données 4 peuvent être utilisées pour stocker les contenus enrichis et/ou les signatures audio.

La solution proposée par l'invention est au moins aussi avantageuse que la technique connue de « Fingerprinting » par rapport au « Watermarking », notamment du fait qu'aucun signal ne doit être injecté dans le signal diffusé, et que la solution offre une bonne bande passante.

La solution de l'invention est néanmoins optimisée par rapport au « Fingerprinting » en terme de temps de traitement : elle ne nécessite pas de grandes quantités de serveurs, de bande passante, ni de connections aux réseaux de diffusion des chaines de télévision (dans ce cas précis) qui doivent être monitorés pour faire la reconnaissance tout azimut des sons. D'autre part, la consommation des batteries de tous les deuxièmes équipements est réduite car ce sont les informations représentatives de T_{REF} qui informent le deuxième écran de commencer et de finir d'écouter (utilisation du micro et des circuits audio) au lieu d'être en écoute permanente.

Dans ce qui précède, on a supposé que l'instant de référence t_{REF} poussé à l'avance par le serveur informatique correspondait à l'instant auquel le programme était effectivement diffusé par la source distante. Bien entendu, sans départir du cadre de la présente invention, cet instant de référence peut également correspondre à l'instant auquel le contenu multimédia à enrichir est effectivement diffusé par la source distante, ce qui permet de réduire encore plus la durée pendant laquelle le micro est à l'écoute et dès la première occurrence de signature audio attendue d'établir la synchronisation entre le premier et le deuxième écran. En particulier, si l'on souhaite enrichir trois contenus multimédia, typiquement trois spots publicitaires, compris dans un même programme , le serveur informatique pourra pousser à l'avance trois instants de référence permettant de calculer à chaque fois le délai de synchronisation à partir duquel le contenu enrichi doit être affiché. En complément de l'instant de référence associé à la diffusion de chaque contenu multimédia à enrichir, on peut prévoir d'envoyer également un instant de fin de manière à définir un intervalle de temps durant lequel le micro sera actif.

Enfin, comme le contenu enrichi a été transmis au deuxième équipement avant même l'instant t_{C} où le contenu multimédia que l'on souhaite enrichir est effectivement reproduit par le premier équipement, ce contenu enrichi s'affiche instantanément parfaitement synchronisé avec le premier écran, sur le deuxième écran.

## Revendications

1. Procédé (100) de synchronisation automatique entre la reproduction, par un premier équipement (1) d'un contenu multimédia compris dans un programme diffusé comprenant une bande sonore et l'affichage d'un contenu enrichi associé au contenu multimédia sur un écran (20) d'un deuxième équipement (2) apte à être connecté à un réseau (9) de communication, ledit contenu enrichi étant transmis (140) automatiquement au deuxième équipement (2) par au moins un serveur (3) informatique dudit réseau (9) de communication, le procédé comprenant:
- une étape (110-130), préalable à la reproduction du contenu multimédia par le premier équipement (1), lors de laquelle au moins une signature audio correspondant à un extrait de la bande sonore représentant de façon univoque le contenu multimédia diffusé est générée (110) et stockée (120) dans une base (4) de données reliée audit serveur (3) informatique, ladite signature audio étant transmise (130) automatiquement pour mémorisation au deuxième équipement (2) par ledit serveur (3) informatique; et
au cours de la diffusion du programme par une source distante, le programme diffusé étant reçu et reproduit par le premier équipement (1) :
- une étape (170) d'écoute par un microphone du deuxième équipement (2) d'un signal audio généré par le premier équipement (1) lors de la reproduction de la bande sonore du programme diffusé, et d'identification de l'instant de reproduction (t_{C}) du contenu multimédia par comparaison du signal audio écouté avec la signature audio mémorisée;
- une étape (180) de détermination d'un délai de synchronisation au bout duquel le contenu enrichi doit être affiché (190) sur l'écran (20) du deuxième équipement (2), et
- une étape (190) d'affichage dudit contenu enrichi sur l'écran du deuxième équipement au bout du délai de synchronisation ;
le procédé étant **caractérisé en ce qu'**il comporte en outre une étape (160) de transmission automatique, par ledit au moins un serveur (3) informatique à destination du deuxième équipement (2) via le réseau (9) de communication, d'une information comprenant un instant de référence (t_{REF}) correspondant à l'instant auquel le contenu multimédia est effectivement diffusé par la source distante, ladite information étant générée (150) par un module (6a) gestionnaire de contenu par écoute de sources diffusant des programmes et reconnaissance du contenu multimédia par identification de la signature audio stockée, et transmise audit au moins un serveur (3) informatique via le réseau (9) de communication;
**en ce que** la réception de ladite information comprenant l'instant de référence (t_{REF}) par le deuxième équipement (2) déclenche ladite étape (170) d'écoute, et **en ce que** le délai de synchronisation est déterminé (180) en fonction seulement de la différence entre l'instant de référence (t_{REF}) et l'instant de reproduction (t_{C}) identifié.

2. Procédé selon la revendication 1, dans lequel le contenu enrichi est généré par un module (7) générateur de contenus enrichis, et stocké dans la base de données (4) avant transmission (140) au deuxième équipement.

3. Procédé selon l'une quelconque des revendications précédentes, dans lequel le programme diffusé est un programme de radio.

4. Procédé selon l'une quelconque des revendications 1 à 2, dans lequel le programme diffusé est un programme télévisé.

5. Procédé selon l'une quelconque des revendications précédentes, dans lequel le premier équipement (1) est un téléviseur, un ordinateur, un téléphone intelligent, une console de jeu, ou tout équipement électronique apte à reproduire au moins le son du programme diffusé reçu.

6. Procédé selon l'une quelconque des revendications précédentes, dans lequel le deuxième équipement (2) est une tablette numérique, un téléphone intelligent, un ordinateur fixe ou portable, ou tout équipement comprenant un microphone, un écran d'affichage, et des moyens de connexion au réseau internet.

7. Serveur informatique (3) pour la mise en œuvre du procédé de synchronisation selon les revendications 1 à 6, **caractérisé en ce qu'**il est apte à transmettre automatiquement au deuxième équipement (2), via le réseau (9) de communication:
- ladite signature audio ;
- ladite information comprenant l'instant de référence (t_{REF}) correspondant à l'instant auquel le contenu multimédia est effectivement diffusé par la source distante; et
- le contenu enrichi à afficher par le deuxième équipement (2).

8. Application logicielle (5) apte à être chargée et exécutée sur un équipement (2) comprenant un microphone, un écran d'affichage (20) et des moyens de connexion au réseau (9) de communication, pour la mise en œuvre du procédé (100) de synchronisation selon les revendications 1 à 6, **caractérisée en ce qu'**elle comporte :
- des instructions de code de programme aptes à commander l'équipement (2) pour qu'il se connecte au serveur (3) informatique via le réseau (9) de communication, de façon à recevoir automatiquement d'une part, ladite signature audio pour mémorisation, et d'autre part, ladite information comprenant l'instant de référence (t_{REF}) correspondant à l'instant auquel le contenu multimédia est effectivement diffusé par la source distante ;
- des instructions de code de programme aptes à commander à l'équipement (2), sur réception de l'instant de référence (t_{REF}), pour qu'il écoute, via le microphone, un signal audio généré par le premier équipement (1) lors de la reproduction de la bande sonore du programme diffusé, et identifie l'instant (t_{C}) de reproduction par comparaison du signal audio écouté avec la signature audio mémorisée;
- des instructions de code de programme aptes à commander l'affichage du contenu enrichi sur l'écran d'affichage (20) au bout d'un délai de synchronisation déterminé à partir seulement de la différence entre l'instant de référence (t_{REF}) et l'instant de reproduction identifié.

## Patentansprüche

1. Verfahren (100) zur automatischen Synchronisierung zwischen der Wiedergabe, durch eine erste Ausrüstung (1), eines Multimedia-Contents, der in einem verbreiteten Programm inbegriffen ist, umfassend eine Tonspur, und der Anzeige eines angereicherten Contents, der dem Multimedia-Content zugeordnet ist, auf einem Bildschirm (20) einer zweiten Ausrüstung (2), die imstande ist, mit einem Kommunikationsnetzwerk (9) verbunden zu sein, wobei der angereicherte Content automatisch an die zweite Ausrüstung (2) von mindestens einem IT-Server (3) des Kommunikationsnetzwerks (9) übertragen (140) wird, wobei das Verfahren umfasst:
- einen Schritt (110-130) vor der Wiedergabe des Multimedia-Contents durch die erste Ausrüstung (1), bei dem mindestens eine Audio-Signatur, die einem Auszug der Tonspur entspricht, die eindeutig den verbreiteten Multimedia-Content repräsentiert, erzeugt (110) und in einer Datenbank (4) gespeichert (120) wird, die mit dem IT-Server (3) verbunden ist, wobei die Audio-Signatur von dem IT-Server (3) zwecks Speicherung an die zweite Ausrüstung (2) automatisch übertragen (130) wird; und
während der Verbreitung des Programms durch eine entfernte Quelle das verbreitete Programm von der ersten Ausrüstung (1) empfangen und wiedergegeben wird:
- einen Schritt (170) des Abhörens durch ein Mikrophon der zweiten Ausrüstung (2) eines von der ersten Ausrüstung (1) erzeugten Audiosignals bei der Wiedergabe der Tonspur des verbreiteten Programms und des Identifizierens des Wiedergabemoments (tc) des Multimedia-Contents durch Vergleichen des abgehörten Audiosignals mit der gespeicherten Audio-Signatur;
- einen Schritt (180) des Bestimmens einer Synchronisierungszeit, an deren Ende der angereicherte Content auf dem Bildschirm (20) der zweiten Ausrüstung (2) angezeigt (190) sein muss, und
- einen Schritt (190) des Anzeigens des angereicherten Contents auf dem Bildschirm der zweiten Ausrüstung am Ende der Synchronisierungszeit;
wobei das Verfahren **dadurch gekennzeichnet ist, dass** es ferner aufweist
einen Schritt (160) des automatischen Übertragens, durch den mindestens einen IT-Server (3) an die zweite Ausrüstung (2) über das Kommunikationsnetzwerk (9), einer Information, die einen Referenzmoment (t_{REF}) umfasst, der dem Moment entspricht, in dem der Multimedia-Contents von der entfernte Quelle tatsächlich verbreitet wird, wobei die Information von einem Contentverwaltungsmodul (6a) durch Abhören von Quellen, die Programme verbreiten, und Erkennen des Multimedia-Contents durch Identifizieren der gespeicherten Audio-Signatur erzeugt (150) und an den mindestens einen IT-Server (3) über das Kommunikationsnetzwerk (9) übertragen wird;
und dass der Empfang der Information, die den Referenzmoment (t_{REF}) umfasst, durch die zweite Ausrüstung (2) den Schritt (170) des Abhörens auslöst,
und dass die Synchronisierungszeit in Abhängigkeit nur von der Differenz zwischen dem Referenzmoment (t_{REF}) und dem identifizierten Wiedergabemoment (tc) bestimmt (180) wird.

2. Verfahren nach Anspruch 1, wobei der angereicherte Content von einem Modul (7) zum Erzeugen angereicherter Contents erzeugt und vor der Übertragung (140) an die zweite Ausrüstung in der Datenbank (4) gespeichert wird.

3. Verfahren nach einem der vorangehenden Ansprüche, wobei das verbreitete Programm ein Radioprogramm ist.

4. Verfahren nach einem der Ansprüche 1 bis 2, wobei das verbreitete Programm ein Fernsehprogramm ist.

5. Verfahren nach einem der vorangehenden Ansprüche, wobei die erste Ausrüstung (1) ein Fernsehapparat, ein Rechner, ein intelligentes Telefon, eine Spielkonsole oder jede elektronische Ausrüstung ist, die imstande ist, mindestens den Ton des empfangenen verbreiteten Programms wiederzugeben.

6. Verfahren nach einem der vorangehenden Ansprüche, wobei die zweite Ausrüstung (2) ein digitales Tablet, ein intelligentes Telefon, ein fester oder tragbarer Rechner oder jede Ausrüstung ist, die ein Mikrophon, einen Anzeigebildschirm und Verbindungsmittel mit den Internetnetzwerk umfasst.

7. IT-Server (3) für die Durchführung des Synchronisierungsverfahrens nach den Ansprüchen 1 bis 6, **dadurch gekennzeichnet, dass** er imstande ist, an die zweite Ausrüstung (2) über das Kommunikationsnetzwerk (9) automatisch zu übertragen:
- die Audio-Signatur;
- die Information, die den Referenzmoment (t_{REF}) umfasst, der dem Moment entspricht, in dem der Multimedia-Contents von der entfernten Quelle tatsächlich verbreitet wird; und
- den von der zweiten Ausrüstung (2) anzuzeigenden angereicherten Content.

8. Software-Anwendung (5), die imstande ist, auf einer Ausrüstung (2), die ein Mikrophon, einen Anzeigebildschirm (20) und Verbindungsmittel mit dem Kommunikationsnetzwerk (9) umfasst, für die Durchführung des Synchronisierungsverfahrens (100) nach den Ansprüchen 1 bis 6 geladen und ausgeführt zu sein, **dadurch gekennzeichnet, dass** es aufweist:
- Programmcodebefehle, die imstande sind, die Ausrüstung (2) zu steuern, damit sie sich mit dem IT-Server (3) über das Kommunikationsnetzwerk (9) derart verbindet, dass sie automatisch zum einen die Audio-Signatur zwecks Speicherung und zum anderen die Information empfängt, die den Referenzmoment (t_{REF}) umfasst, der dem Moment entspricht, in dem der Multimedia-Content von der entfernten Quelle tatsächlich verbreitet wird;
- Programmcodebefehle, die imstande sind, der Ausrüstung (2) bei Empfang des Referenzmoments (t_{REF}) zu befehlen, dass sie über das Mikrophon ein von der ersten Ausrüstung bei der Wiedergabe des verbreiteten Programms (1) erzeugtes Audiosignal abhört und den Wiedergabemoment (tc) durch Vergleich des abgehörten Audiosignals mit der gespeicherten Audio-Signatur identifiziert;
- Programmcodebefehle, die imstande sind, die Anzeige des angereicherten Contents auf dem Anzeigebildschirm (20) am Ende einer nur auf der Basis des Referenzmoments (t_{REF}) und des identifizierten Wiedergabemoments bestimmten Synchronisierungszeit zu befehlen.

## Claims

1. A method (100) for automatic synchronization between the reproduction, by a first equipment item (1), of multimedia content comprised in a broadcast program comprising a soundtrack and the display of enriched content associated with the multimedia content on a screen (20) of a second equipment item (2) able to be connected to a communication network (9), said enriched content being transmitted (140) automatically to the second equipment item (2) by at least one computer server (3) of said communication network (9), said method comprising:
- a step (110-130), prior to the reproduction of the multimedia content by the first equipment item (1), during which at least one audio signature corresponding to an excerpt of the soundtrack unequivocally representing the broadcast multimedia content is generated (110) and stored (120) in a database (4) connected to said computer server (3), said audio signature being transmitted (130) automatically for storage to the second equipment item (2) by said computer server (3); and
during the broadcasting of the program by a remote source, the broadcast program being received and reproduced by the first equipment item (1):
- a step (170) for listening by a microphone of the second equipment item (2) to an audio signal generated by the first equipment item (1) during the reproduction of the soundtrack of the broadcast program, and identifying the reproduction instant (tc) of the multimedia content by comparing the listened to audio signal with the stored audio signature;
- a step (180) for determining a synchronization period at the end of which the enriched content must be displayed (190) on the screen (20) of the second equipment item (2), and
- a step (190) for displaying said enriched content on the screen of the second equipment item at the end of the synchronization period;
the method being **characterized in that** it further includes
a step (160) for automatic transmission, by said at least one computer server (3) to the second equipment item (2) via the communication network (9), of an information item comprising a reference instant (t_{REF}) corresponding to the instant at which the multimedia content is actually broadcast by the remote source, said information being generated (150) by a content management module (6a) by listening to sources broadcasting programs and recognition of the multimedia content by identification of the stored audio signature, and transmitted to said at least one computer server (3) via the communication network (9);
**in that** the reception of said information comprising the reference instant (t_{REF}) by the second equipment item (2) triggers said listening step (170),
and **in that** the synchronization period is determined (180) as a function only of the difference between the reference instant (t_{REF}) and the identified reproduction instant (tc).

2. The method according to claim 1, wherein the enriched content is generated by an enriched content generating module (7), and stored in the database (4) before transmission (140) to the second equipment item.

3. The method according to any one of the preceding claims, wherein the broadcast program is a radio program.

4. The method according to any one of claims 1 to 2, wherein the broadcast program is a televised program.

5. The method according to any one of the preceding claims, wherein the first equipment item (1) is a television set, a computer, a smartphone, a game console, or any electronic equipment item able to reproduce at least the sound of the received broadcast program.

6. The method according to any one of the preceding claims, wherein the second equipment item (2) is a digital tablet, a smartphone, a desktop or laptop computer, or any equipment item comprising a microphone, a display screen, and means for connecting to the Internet.

7. A computer server (3) for implementing the synchronization method according to claims 1 to 6, **characterized in that** it is able to automatically transmit to the second equipment item (2), via the communication network (9):
- said audio signature;
- said information item comprising the reference instant (t_{REF}) corresponding to the instant at which the multimedia content is actually broadcast by the remote source; and
- the enriched content to be displayed by the second equipment item (2).

8. A software application (5) able to be loaded and run on an equipment item (2) comprising a microphone, a display screen (20) and connection means to the communication network (9), for the implementation of the synchronization method (100) according to claims 1 to 6, **characterized in that** it includes:
- program code instructions able to command the equipment item (2) so that it connects to the computer server (3) via the communication network (9), so as to automatically receive, on the one hand, said audio signature to be stored, and on the other hand, said information comprising the reference instant (t_{REF}) corresponding to the instant at which the multimedia content is actually broadcast by the remote source;
- program code instructions able to command the equipment item (2), on reception of the reference instant (t_{REF}), so that it listens, via the microphone, to an audio signal generated by the first equipment item (1) during the reproduction of the soundtrack of the broadcast program, and identifies the reproduction instant (tc) by comparison of the listened to audio signal with the stored audio signature;
- program code instructions able to command the display of the enriched content on the display screen (20) after a synchronization period determined only from the difference between the reference instant (t_{REF}) and the identified reproduction instant.
